# EUROPÄISCHE PATENTSCHRIFT

(11) **EP 2 319 056 B1**
(45) Veröffentlichungstag und Bekanntmachung des Hinweises auf die Patenterteilung: **10.10.2012**
(21) Anmeldenummer: 10724048.3
(22) Anmeldetag: 27.05.2010
(51) Int. Cl.: F28D 15/02, H01F 27/02, F03D 11/00, H01F 27/18, H01F 27/28, H01F 27/32, H01F 41/12

(54) **TRANSFORMATORSPULE UND TRANSFORMATOR MIT PASSIVER KÜHLUNG**
TRANSFORMER COIL AND TRANSFORMER HAVING PASSIVE COOLING
BOBINE DE TRANSFORMATEUR ET TRANSFORMATEUR A REFROIDISSEMENT PASSIF

(30) Priorität: 05.06.2009 EP 09161988
(43) Veröffentlichungstag der Anmeldung: 11.05.2011
(73) Patentinhaber: ABB Technology AG, 8050 Zürich (CH)
(72) Erfinder: CHARTOUNI, Daniel, CH-5430 Wettingen (CH); MURILLO, Rafael, E-50004 Zaragoza (ES); BÜHLER, Tilo, CH-5430 Wettingen (CH)
(74) Vertreter: ABB Patent Attorneys
(86) Internationale Anmeldenummer: PCT/EP2010/057322
(87) Internationale Veröffentlichungsnummer: WO 2010/139597

(56) Entgegenhaltungen:
- WO-A-2006/016377
- GB-A- 764 576
- US-A- 4 129 845
- US-A- 6 147 580
- US-B1- 6 368 530

## Beschreibung

### Technisches Gebiet

Die vorliegende Erfindung betrifft eine Transformatorspule mit einer passiven Kühleinrichtung, sowie einen Transformator mit wenigstens einer solchen Spule, insbesondere einen harzgekapselten Trockentyp-Transformator mit einem eingebauten Wärmerohr zum Abführen entstehender Wärme, sowie ein Verfahren zur Herstellung eines kühlbaren Trockentyp-Transformators.

### Stand der Technik

Die Leistungsfähigkeit von Transformatoren wurde im Verlauf der vergangenen Jahrzehnte kontinuierlich gesteigert und deren Zuverlässigkeit verbessert. Um diese gesteigerte Leistungsfähigkeit und die geforderte Betriebsicherheit zu gewährleisten, ist eine effiziente und zuverlässige Kühlung des Transformators und seiner Komponenten wesentlich.

Von Leistungstransformatoren, welche in einem Spannungsbereich bis zu typischerweise 800 kV arbeiten sind Aktivkühlungen, welche Öl als Kühlmedium benutzen, gut bekannt. Grosse Leistungstransformatoren sind für gewöhnlich in Systemen installiert bei denen eine hohe Kurzschlussleistung auftreten kann. Somit bestimmt der bei Kurzschlussereignissen auftretende mechanische Stress für gewöhnlich das Design. Heutige Leistungstransformatoren benutzen Öl sowohl zur elektrischen Isolation als auch zur Kühlung. Das Öl wird dabei aktiv durch den Trafo gepumpt und die Wärme mittels Wärmetauschern dem Kreislauf entzogen.

Verteiltransformatoren werden entweder als Öl gefüllte oder als Trockenisolationsmodelle realisiert. Ölgefüllte Verteiltransformatoren weisen Primärspannungen bis zu 72.5 kV während Trockentransformatoren mit offnen oder gekapselten Windungen typischerweise Primärspannungen bis zu 52 kV aufweisen und vor allem dort eingesetzt werden, wo das Risiko einer Brandgefahr oder Umweltkontamination minimal gehalten werden muss.

Zur Kühlung von Trockentransformatoren ist der Einsatz von Gebläsen bzw. Querstromlüftern bekannt. Bei dieser Art von aktiver Zwangskühlung wird Luft durch im Trafo befindliche Kanäle geblasen. Die zur Luftleitung dienenden Kanäle befinden sich aus bautechnischen Gründen nur zwischen den Wicklungen auf der Primärseite der Trafospule, da auf der Sekundärseite die Windungen typischerweise zuerst spiralförmig in radialer Richtung in mehreren Lagen gewickelt werden und erst danach die nächste axial benachbarte Windung in gleich gewickelter Weise gewickelt wird, was das Vorsehen von Kühlkanälen erschwert. Die mit Epoxydharz vergossene Sekundärseite des Trockentrafos lässt sich somit nur über Wärmeleitung und Konvektion an der Oberfläche des Epoxydharzes kühlen. Daraus resultiert, dass die Leistungsfähigkeit der meisten so gekühlten Trockentransformatoren durch die Arbeitstemperatur auf der Sekundärseite des Trafos begrenzt wird. Aktivkühlungen sind weiterhin nachteilig, da solche Systeme nicht autonom arbeiten und leichter ausfallen können.

Eine andere Art der Kühlung für Trockentransformatoren ist aus der US 5656984 bekannt. Dort wird eine Passivkühlung vorgeschlagen, bei der vier Wärmerohre nahe am Transformatorkern platziert und von den Primärwindungen umwickelt werden. Die Verdampfer der einzelnen Wärmerohre sind dazu als länglich verlaufende dünne Rohre ausgebildet, die parallel zur Wickelachse verlaufen. Durch die sehr lokale und singuläre Anordnung der Wärmerohre vor allem in radialer Richtung des Transformators wird die entstehende Wärme, welche z.B. von Übertragungsverlusten und Hysterese herrührt, vor allem in Bereichen nahe der einzelnen Wärmerohre entzogen. Die Kühlleistung variiert somit lokal sehr stark und hängt von der Anordnung der einzelnen Wärmerohre im Trafo ab. Bei genanntem Aufbau werden mehrere Wärmerohre benötigt, die vor allem Zonen nahe des Transformatorkerns kühlen.

In der US 4129845 wird eine aktive Transformatorkühlung vorgeschlagen, bei welchem der zu kühlende Trafo von einem Behälter ummantelt ist, in welchem sich auch ein Flüssigkeitsreservoir befindet. Eine Pumpe fördert die Kühlflüssigkeit von dem unterhalb des Trafos befindlichen Reservoir nach oben und verteilt sie über den Trafowicklungen. Die so verteilte Kühlflüssigkeit fliesst zwischen den Windungen des Trafos hinab und verdampft.

In der US6368530 wird eine zylinderförmige, kühlbare Transformatorspule offenbart, bei der vier Kühlkanäle zwischen der inneren und der äusseren Windung vorgesehen sind. Die Kühlkanäle verlaufen in Richtung der Rotationsachse und sind voneinander gleich beabstandet.

In der GB764576 wird ein kühlbarer Transformator offenbart, der von einem Behältnis umschlossen ist, welches mit Kühlflüssigkeit aufgefüllt ist. Die verdampfende Kühlflüssigkeit kann in die als Kondensator wirkenden Leitungen aufsteigen, dort kondensieren und zurückfliessen.

Ein weiterer Einsatz von Wärmerohren zur passiven Kühlung von Transformatoren ist der JP6215959 zu entnehmen. Dort werden eine Vielzahl stabförmig ausgebildeter Verdampfer konzentrisch und axial beabstandet um den Transformatorkern gelegt, oder verlaufen U-förmig gebogen in axialer Richtung zwischen den einzelnen Windungslagen.

Weitere gattungsgemässe Transformtoren und Transformatorenspulen sind in US6147580 und W02006/016377 offenbart.

Bei diesen und anderen Transformatorkühlungen sind die Anordnung, der Einbau in eine Transformatorspule und der Aufbau der Transformatorkühlungen verbesserungswürdig. Ein verbessertes Kühlkonzept zur Erreichung einer höheren Leistungsdichte bei derartigen Trockentransformatoren ist wünschenswert.

### Darstellung der Erfindung

Es ist Aufgabe der Erfindung eine gekühlte Transformatorspule und einen gekühlten Transformator bereitzustellen, bei dem das Kühlmittel an solche Bereiche der Windungen geführt wird, welche thermisch und stark belastet sind. Die Aufgabe wird gelöst durch eine Transformatorspule mit einem Wärmerohr gemäss dem unabhängigen Anspruch 1, und durch ein Verfahren zur Herstellung eines kühlbaren Transformators gemäss dem unabhängigen Anspruch 13. Weiterhin wird ein Transformator mit einer solchen Transformatorspule gemäss Anspruch 1 2 und die Verwendung eines solchen Transformators in einer Windkraftanlage gemäss Anspruch 1 5 vorgeschlagen. Weitere Vorteile, Merkmale, Aspekte der Erfindung ergeben sich aus den Unteransprüchen, der Beschreibung und den Figuren.

Gemäss einem Aspekt der Erfindung wird eine Transformatorspule mit einer Primärwicklung und einer Sekundärwicklung vorgeschlagen, die ein Wärmerohr zum Abführen von Wärmeenergie aufweist. Die Wicklungen sind entlang der Wickelachse der Transformatorspule angeordnet. Der als Verdampfer bezeichnete Abschnitt des Wärmerohres ist im Bereich der Wicklungen angeordnet. Der Verdampfer bildet durch seine Form mehrere flächenhafte Verdampfersegmente, welche sich in Umfangrichtung der Wicklungen entlang der Wickelachse erstrecken und überstreichen dabei eine Vielzahl der Windungen der Sekundärwicklung. Sowohl Primärwicklung als auch Sekundärwicklung besitzen eine Mehrzahl von Windungen. Die Windungen der Primärseite sind wegen des hohen zu übertragenden Stromes flächig, entsprechend einem aufgewickelten Band ausgeführt. Die Breite jeder einzelnen Windung entspricht im Wesentlichen der ganzen Länge der Spule. Die Sekundärwicklung hingegen besitzt eine Vielzahl von Windungen, die wesentlich schmaler sind als diejenigen der Primärseite. Die Sekundärwicklung ergibt sich aus Windungen die in radialer als auch in axialer Richtung der Spule gewickelt sind.

Unter dem Begriff Wärmerohr soll in diesem Zusammenhang nicht die rein bauliche Ausführung eines Wärmeübertragers in Form eines Rohres an sich verstanden werden, sondern vielmehr seine funktionelle Ausführung als ein passiv arbeitender Wärmeübertrager, der ein hermetisch gekapselten Volumen mit einem Arbeitsmedium aufweist und bei dem die im Verdampfer aufgenommene Verdampfungswärme im Kondensator abgegeben und das Arbeitsmedium dort kondensiert wird.

Die Form des Verdampfers, der aus mehreren Verdampferelementen aufgebaut ist, ist der Form der Spule angepasst. Das heisst, die Verdampferelemente und damit der Verdampfer zeigen die Form der Transformatorspule auf, beispielweise eine zylinderförmige Form oder bilden zumindest Segmente eines Zylinders. Damit ist der Wärmeaustausch zwischen Verdampfer und Spule über die gesamte Oberfläche der Transformatorspule möglich. Durch den flächigen Aufbau des Verdampfers, also seine Erstreckung in Umfangsrichtung und entlang der Spulenachse überstreichen die einzelnen Verdampfersegmente bzw. der Verdampfer entlang der Spulenwickelachse eine Vielzahl von Windungen der Sekundärwicklung womit eine Kühlung besonders im thermisch stark beanspruchten Bereichen der Spule ermöglicht wird. Die Verdampfersegmente sind im Bereich des Bodens geschlossen. Mit anderen Worten, die Verdampfersegmente bilden ein ringzylinderförmiges Gefäss in welchem sich das flüssige Kühlmedium sammelt. Dabei können die Verdampfersegmente von der Sekundärwicklung oder aber auch die Sekundärwicklung von den Verdampfersegmenten umschlossen sein.

In Ausführungsformen erstrecken sich die Verdampfersegmente über alle Wicklungen entlang der Wickelachse. Hierdurch ist gewährleistet, dass ein gleichmässiger Wärmeaustausch mit allen Windungen entlang der Wickelachse erreicht wird.

In Ausführungsformen sind mehrere Verdampfersegmente miteinander im Bereich des Verdampferbodens so miteinander verbunden, dass das Arbeitsmittel sich im Bodenbereich des zylinderförmigen Verdampfers sammeln und durch alle Verdampfersegmente zirkulieren kann.

In Ausführungsformen sind mehrere Verdampferelemente im Bereich des Verdampferauslasses so miteinander verbunden, dass wenigstens ein Verdampferauslass gebildet wird. Der Verdampferauslass stellt die Verbindung zum Kondensator des Wärmerohres her.

In Ausführungsformen ist der Verdampfer innerhalb der Windung mit kleinstem Windungsdurchmesser bzw. zwischen zwei Windungen der Primärwicklung angeordnet, wodurch eine optimale Kühlung der Spule in unmittelbarer Nähe des Spulenkerns bzw. der Primärwicklung erreicht wird und bei der Herstellung der Verdampfer bewickelt werden kann.

In Ausführungsformen ist der Verdampfer zwischen Primärwicklung und Sekundärwicklung angeordnet, wodurch eine optimale Kühlung und eine Verbesserung der dielektrischen Festigkeit zwischen Primärwicklung und Sekundärwicklung erzielt werden.

In Ausführungsformen umschliesst der Verdampfer die Windung der Sekundärwicklung mit dem grössten Windungsdurchmesser wodurch eine optimale Kühlung der Windungen der Sekundärseite erreicht wird und die Herstellung einer kühlbaren Spule durch das Ummanteln der Sekundärwicklung vereinfacht wird.

Die vorliegende Erfindung umfasst ferner ein Verfahren zur Herstellung einer Transformatorspule mit den folgenden Schritten. Bilden einer Mehrzahl von Windungen der Primärwicklung die sich aus alternativen Lagen von elektrischem Isoliermaterial und elektrisch leitendem Schichtmaterial zusammensetzen. Diese Lagen werden um eine zentrale Wickelachse gewickelt. Es wird weiterhin eine Mehrzahl von Windungen der Sekundärwicklung um die Wickelachse gewickelt. Die Windungen der Sekundärwicklung werden anschliessend mittels eines Hohlkörpers aus verformbaren Material umhüllt. Dann werden die Windungen der Sekundärwicklung und der Hohlkörper mittels eines Giessharzes vergossen, so dass dadurch der Hohlkörper, welcher den Verdampfer des Wärmerohres bildet, formstabilisiert wird. Das Giessharz wird unter Bildung eines Blockes ausgehärtet. Anschliessend wird der Block aus Sekundärwicklung und umhüllenden Hohlkörper um die gewickelte Primärwicklung angeordnet. Der Hohlkörper ist in Handhabung und Aufbau dem Prinzip einer Luftmatratze vergleichbar. Zur Bildung des Verdampfers aus dem Hohlkörper wird der Hohlkörper mit einem Gas oder einer Flüssigkeit befüllt und kann durch Biegen entsprechend der Form der Transformatorspule angepasst werden. Es lässt sich somit die Form des Verdampfers an nahezu jede beliebige Form bzw. beliebige Grösse des zu umhüllenden Spulenkörpers anpassen. Das Herstellungsverfahren erfordert nicht mehr, dass ein Hohlkörper speziell nach den jeweiligen Abmessungen der Transformatorspule extra angefertigt werden muss. Stattdessen vereinfacht sich das Verfahren dadurch, dass das verformbare Material für den Hohlkörper nur noch auf die Länge des Umfanges der jeweiligen Spule zugeschnitten wird, das Material mit z.B. Luft befüllt wird und mit dem luftgefüllten Material die Spule ummantelt wird.

Bei einer Ausführungsform des Herstellungsverfahrens werden nach dem Aushärten des Giessharzes die aus dem verformbaren Material gebildeten Wände des Verdampfers mittels eines einfüllbaren Lösungsmittels aufgelöst. Durch das Auflösen des Verdampfermaterials kann das Arbeitsmittel dann frei zwischen Sekundärspule und dem die Sekundärspule umgebenden Giessharz um den Spulenkern zirkulieren. Es kommt somit zur direkten Wärmeübertragung von der Spule auf das Arbeitsmittel, womit die Kühlleistung in der Spule weiter verbessern wird. In einem alternativen Herstellungsverfahren wird der vom Giessharz umgebene Hohlkörper mittels Wärme aufgelöst. Das Auflösen mittels Wärme ermöglicht es, die Verfahrenschritte Aushärten und Auflösen des Hohlkörpers in einem einzigen Verfahrensschritt durchzuführen.

### Kurze Beschreibung der Figuren

Fig. 1 zeigt Perspektiv- und Schnittansicht einer Transformatorspule mit einem Wärmerohr welches zwischen Primärwicklung und Sekundärwicklung angeordnet ist.
Fig. 2 zeigt die perspektivische Ansicht und die perspektivische Schnittansicht einer Transformatorspule mit einem hohlzylinderförmigen und aus vier Verdampfersegmenten bestehenden Wärmerohr, wobei das Wärmerohr direkt auf der äussersten Windung der Primärwicklung angeordnet ist.
Fig. 3 zeigt eine Schnittansicht einer Transformatorspule mit einem hohlzylinderförmigen und aus einer Vielzahl von Segmenten bestehenden Wärmerohr, wobei das Wärmerohr zwischen dem Kern und der innersten Windung der Primärwicklung angeordnet ist.
Fig. 4 zeigt eine perspektivische Ansicht einer Transformatorspule mit einem in Giessharz vergossenen Wärmerohr, welches auf der äusserten Windung der Primärwicklung angeordnet ist.
Fig. 5 zeigt eine Ansicht einer Windkraftanlage, bei der die erfindungsgemässen Transformatorspulen in einem Transformator in der Gondel der Windkraftanlage angeordnet werden.

### Wege zur Ausführung der Erfindung

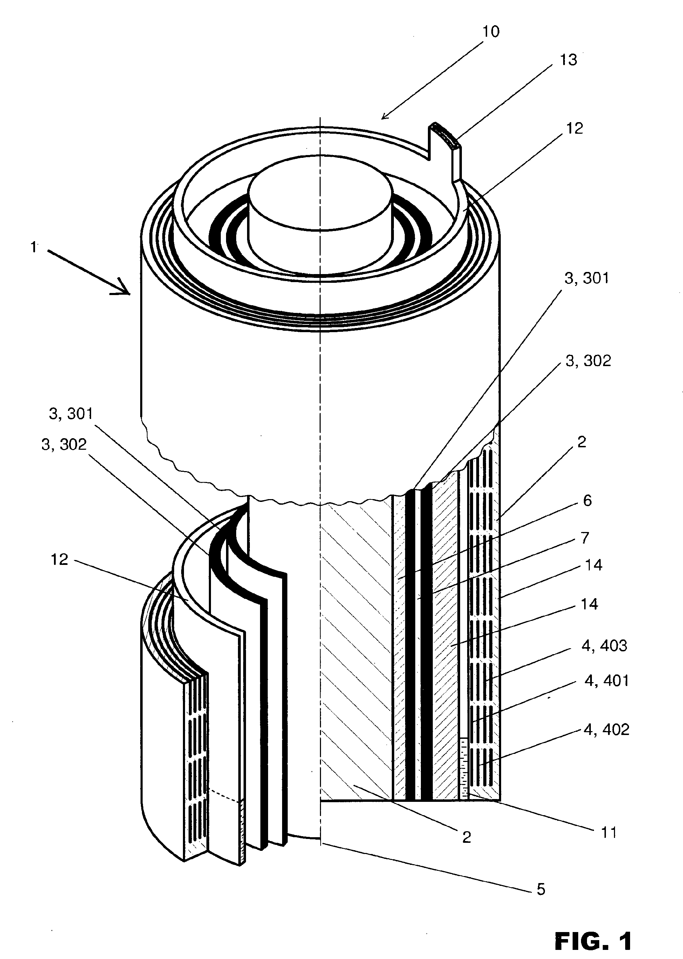

Fig. 1 zeigt eine schematische Ansicht des Aufbaus einer mittels Wärmerohr 10 kühlbaren, harzgekapselten Trockentransformatorspule 1 mit einem Kern 2, welche Teil eines nicht näher dargestellten Transformators ist. Auf den zylindrischen Transformatorkern 2 sind die Primärwicklungen 3 und die Sekundärwicklungen 4 aufgewickelt, zwischen denen das Wärmerohr 10 eingebettet ist. Auf dem Transformatorkern 2 sind alternative Lagen aus Isolierlagen 6, 7, 8 z.B. aus Polyester und Windungen 301, 302 der Primärwicklung 3 aufgewickelt. Die Windungen 301, 302 der Primärwicklung 3 erstrecken sich entlang der Wickelachse 5 der Transformatorspule 1 und über die ganze Länge der Transformatorspule 1 , etwa über 1 Meter. Die Spule 1 besitzt wie in Figur 1 beispielhaft gezeigt eine erste und eine zweite Primärwindung 301 , 302, kann aber je nach Konfiguration auch jede andere Anzahl von Windungen, z.B. 3, 4, 5, 6 oder mehr aufweisen. Typischerweise werden für die Primärwicklung 3 Aluminiumfolien mit einer Wandstärke von etwa 1 bis 3 mm verwendet. In einigen Ausführungen wird auch Kupfer als Material für die Primärwicklung 3 verwendet.

Das Wärmerohr 10 weist im Wesentlichen einen hohlzylinderförmigen Verdampfer 12 auf, dessen Form an die Gestalt des innersten Windung 401 der Sekundärwicklung 4 angepasst ist, was eine optimale Wärmeübertragung im Trockentransformator bewirkt. Der Verdampfer ist somit ringförmig bzw. konzentrisch zur Wickelachse 5 ausgebildet.

In Inneren des Verdampfers 12 zirkuliert das Arbeitsmedium 11. Am oberen Ende der Spule 1 mündet der Verdampfer 12 in einen Verdampferauslass 13. Dieser Verdampferauslass 13 verbindet den Verdampfer 12 mit einem nicht weiter dargestellten Kondensator des Wärmerohres 10, in welchem Kondensator sich das verdampfende Arbeitsmittel ausbreitet und nach Wärmeabgabe kondensiert wird. Zur mechanischen Entkopplung, oder um den Kondensator an einem Ort entfernt vom Verdampfer 12 zu platzieren, kann zwischen Verdampfer 12 und Kondensator ein flexibler Abschnitt, beispielsweise ein Wellbalg eingefügt werden. Das Wärmerohr 10 erstreckt sich somit zumindest teilweise über die Abmessungen der Transformatorspule 1 und damit über die Abmessungen des Trockentransformators hinaus.

Der Verdampferauslass 13 zwischen Verdampfer und Kondensator erstreckt sich entlang eines Teilbereiches des Verdampferumfangs. In anderen Ausführungsvarianten kann sich der Verdampferauslass 13 auch über einen grösseren Bereich des Verdampferumfanges erstrecken, er kann sogar den ganzen Unfang einnehmen.

Die Windungen 401, 402 der Sekundärwicklung 4 sind direkt auf das Wärmerohr 10 gewickelt. Als Windungsmaterial werden dünne Aluminiumfolien mit einer Wandstärke von hier beispielweise etwa 0.5 mm verwendet. Aus dielektrischen Gründen ist das Wärmerohr 10 aus elektrisch isolierendem Material, welches gute thermische Leitfähigkeit aufweist. Die Struktur aus gewickelter Sekundärwicklung 4 und Wärmerohr 10 wird mittels eines Vakuum-Giessverfahrens in Epoxydharz zu einem Block vergossen. Nach dem Einkapseln und Aushärten wird der vergossen Block aus Sekundärwicklung 4 und Wärmerohr 10 um den Kern 2 und die Primärwicklung 3 der Spule 1 angeordnet. Auf diese Weise ist die Trockentransformatorspule 1 mittels eines einzigen Wärmerohres 10 kühlbar und unterstützt die Abführung von Wärme besonders effektiv im inneren Bereich der Spule 1 zwischen Primärwicklung 3 und Sekundärwicklung 4.

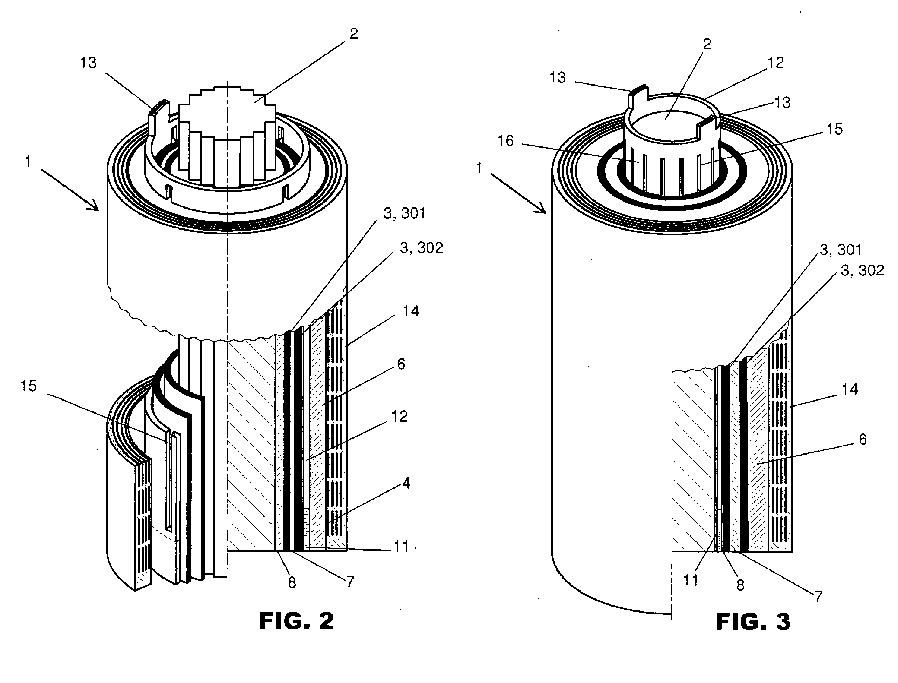

Die in Figur 2 dargestellte Trockentransformatorspule 1 ist der Spule 1 von Figur 1 ähnlich. Im Unterschied ist das in Figur 2 gezeigte Wärmerohr 10 in direktem thermischen und elektrischen Kontakt mit der äusseren Windung 302 der Primärwicklung 3 wodurch eine besonders hohe Wärmeleitfähigkeit zwischen der Primärwicklung 3 und Wärmerohr 10 erreicht wird und die in der Primärwicklung 3 auftretende Wärme optimal auf des Wärmerohr 10 übertragen wird. Das Wärmerohr 10 ummantelt mit seinem Verdampfer 12 die Windung 302 mit dem grössten Windungsdurchmesser der Primärwicklung 3. Der metallische Verdampfer 12 befindet sich auf dem elektrischen Potential der Primärwicklung 3. Zur galvanischen Trennung von Verdampfer 12 und Kondensator 17 des Wärmerohres 10, ist der Kondensator 17 mittels eines Isolierstückes (nicht gezeigt) vom Verdampfer beabstandet. Der Verdampfer 12 weist vier schlitzförmige Verdampferzwischenräume 15 auf, die sich entlang der Wickelachse 5 der Spule 1 erstrecken. Durch diese Verdampferzwischenräume wird der Verdampfer 12 in mehrere Verdampfersegmente 16 unterteilt. Jedes Verdampfersegment 16 erstreckt sich in Richtung der Wickelachse über alle Windungen 401, 402 der Sekundärwicklung 4.

Die elektrische Isolation zwischen dem sich auf Potential der Primärwicklung 3 befindlichen Verdampfer 12 und der Sekundärwicklung 4 wird hier dadurch erreicht, dass der Verdampfer mit einer Isolierlage 6 entsprechender Stärke ummantelt wird. Die Sekundärwicklung 4 ist wiederum mittels Vakuum-Giessverfahren in Epoxydharz 14 vergossen. In einer anderen Ausführungsform wird die dielektrische Festigkeit zwischen Verdampfer und der Sekundärwicklung 4 dadurch erricht, dass die Innenseite des Epoxydharzvergusses 14 in der entsprechenden Stärke ausgeführt wird. In einer wieder anderen Ausführungsform ist zur Erzielung der dielektrischen Festigkeit zwischen der Primärwicklung 3 und der in Epoxydharz vergossenen Sekundärwicklung 4 ein zusätzlicher Luftspalt vorgesehen.

Das in Figur 3 gezeigte Wärmerohr 10 der Transformatorspule 1 weist eine Vielzahl von Verdampferzwischenräumen 15 auf, wodurch der Verdampfer 12 in Verdampfersegmente 16 unterteilt wird. Die flächenhaften Verdampfersegmente 16 sind im Bodenbereich, welcher als ein erstes Ende der Verdampfersegmente 16 darstellt, miteinander verbunden und bilden somit ein Sammelbecken für das Arbeitsmedium 11. Das Arbeitsmedium 11 kann durch alle Verdampfersegmente 16 hindurch zirkulieren und die auftretende Wärme der Spule 1 über die gesamte Spulenlänge aufnehmen. Die Verdampfersegmente 16 sind auch im Bereich ihrer zweiten Enden miteinander verbunden und gehen dort in zwei Verdampferauslässe 13 über. Um den Spulenkern 2 ist der hohlzylinderförmige metallische Verdampfer angeordnet. Die Innenwandung des Verdampfers 12 ist in direktem thermischen und elektrischen Kontakt mit dem Spulenkern 2. Da der Kern 2 potentialfrei oder geerdet ist, erübrigt sich somit eine elektrische Isolierstrecke zwischen Verdampfer 12 und Kondensator 17 des Wärmerohres 10. Auf den Verdampfer 12 sind alternierend Lagen aus Isoliermaterial 6, 7, 8 und Windungen 301, 302 der Primärwicklung 3 aufgewickelt. Die Primärwicklung 3 ist wiederum von der in Epoxydharz 14 vergossenen Sekundärwicklung 4 umgeben.

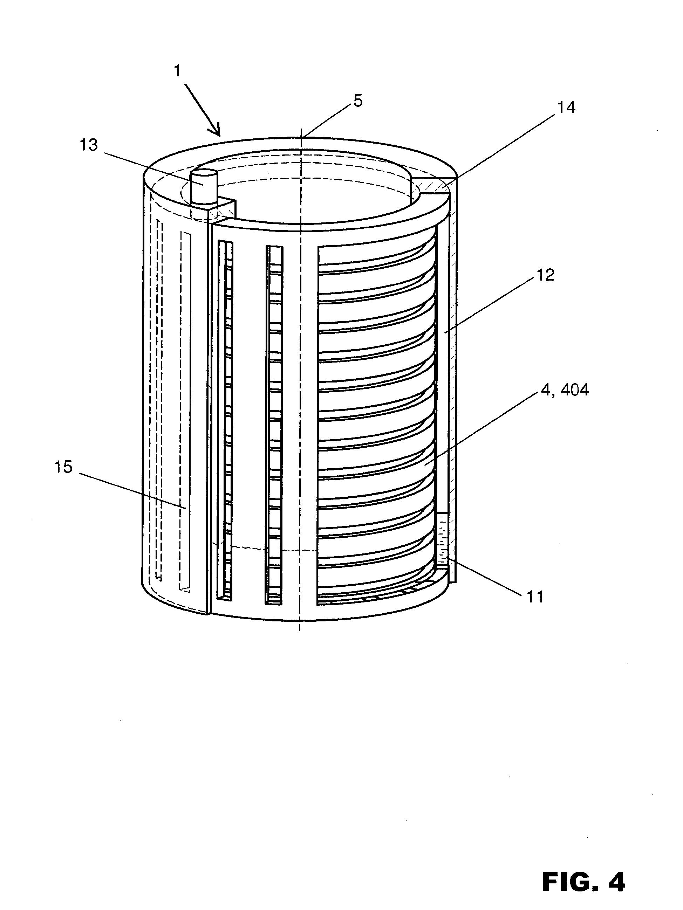

Figur 4 zeigt eine weitere Ausführung einer Trocktentyp-Transfomatorspule 1 bei welcher das Wärmerohr 10 in die Sekundärwicklung 4 integriert ist. Der Verdampfer 12 des Wärmerohres 10 weist eine Vielzahl von Verdampfersegmenten 1 6 auf, die den zylinderförmig erstreckten Körper des Verdampfers 12 bilden, wobei die äusseren Windungen 402 der Sekundärwicklung 4 vollständig vom Verdampfer 12 umhüllt werden. Zur Erzielung einer optimalen thermischen Wärmeübertragung zwischen Sekundärwicklung 4 und Verdampfer 12, befindet sich der Verdampfer 12 in direktem thermischen Kontakt mit der Sekundärwicklung 4. Da sich die äusseren Windungen 404 auf Hochspannungspotential befinden, wurde für den Verdampfer 12 ein elektrisch isolierendes Material mit guter Wärmeleitfähigkeit gewählt. Die Sekundärwicklung 4 mit dem umhüllenden Wärmerohr 10 sind weiterhin zu einem Block in Epoxydharz 14 vergossen. Der Verdampferauslass 13 wird durch einen rohrförmigen Stutzen gebildet der den Übergang zum Kondensator des Wärmerohres 10 bildet. Bei einem auf diese Weise integrierten Wärmerohr 10 wird eine gute Wärmeabfuhr aus der Sekundärwicklung 4 insbesondere aus den äussersten Windungen 402 erreicht.

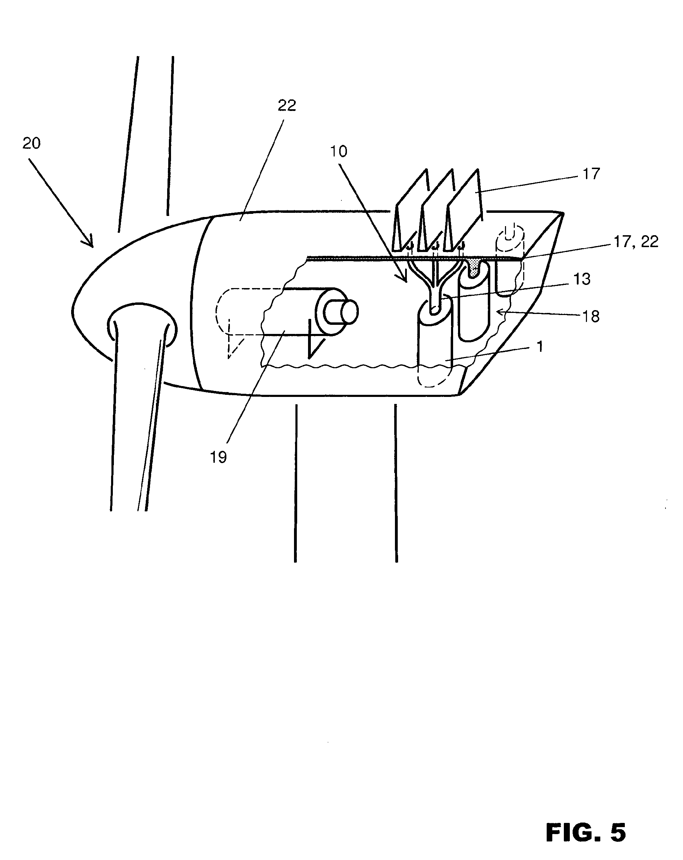

Figur 5 zeigt den Einbau eines mittels dreier Wärmerohre 10 kühlbaren Trockentransformators 18 in einer Windkraftanlage 20. Über den Trockentransformator 18 wird der vom Generator 19 erzeugte Strom in das Energieversorgungsnetz eingespeist. Der Transformator 1 8, welcher in der Gondel 21 der Windkraftanlage 20 untergebracht ist, besitzt drei Transformatorspulen 1, von denen jede jeweils ein Wärmerohr 10 mit einem Verdampfer 12 aufweist und der Verdampfer 12 in der zuvor beschrieben Art und Weise in die Spule integriert wurde. Jeder der drei Verdampferauslässe 13 ist mit dem jeweilig zugehörigen Kondensator 17 des Wärmerohres 10 verbunden. Der Kondensator 17 der ersten Spule 1 besitzt drei Kühlrippen, die ausserhalb der Gondel 21 auf dem Dach der Gondel 21 montiert sind. Für die zweite Spule 1 ist eine weitere Ausführungsform in Figur 5 dargestellt. Dort mündet der Verdampferauslass 13 in das als Kondensator 17 fungierende hohl ausgeführte Dachteil 22 der Gondel 21. Grosse Teile des Daches 22 können damit effizient auch als Kühlfläche für den Kondensator 17 verwendet werden. Durch die Ausgestaltung des Kondensators 17 ausserhalb der Gondel 21, oder integriert im Dach 22 der Gondel 21, wird das Arbeitsmittel 11 vom hermetisch gekapselten Innenraum der Gondel 21 nach aussen geführt und kann die Verdampfungswärme über den Kondensator 17 direkt an die Umwelt abgeben. Eine auf diese Weise aufgebaute Windkraftanlage 20 weist eine selbstregulierende Kühlung des Trockentransformators 18 auf. Mit zunehmender Windstärke wird eine zunehmende zu übertragende elektrische Leistung über den Transformator 18 ins Netz eingespeist. Gleichzeitig wird aber auch der Kondensator 17 stärker vom Wind angeblasen, was die Kühlleistung des Kondensators 1 7erhöht. Die Kühlleistung wird somit automatisch an die zu übertragende Leistung des Transformators 18 adaptiert. Bei derart aufgebauten und kühlbaren Transformatoren 18 lassen sich trotz hermetischer Kapslung durch die Gondel 21, wie es beispielsweise Windkraftanlagen 20 auf hoher See erfordern, hohe Leistungen bei kleiner und kompakter Bauweise des Trockentransformators 18 übertragen. Der Aufbau der Kühlung eines derart ausgeführten Trockentransformators 18 in einer Windkraftanlage 20 vereinfacht sich vorteilhaft dadurch, dass nunmehr lediglich der Verdampferauslass 13 bis zum Dach der Gondel 21 geführt werden muss oder nur noch der Verdampferauslass 13 durch das Gondeldach 22 nach aussen geführt werden muss und aufwendige Kühlinstallationen im Inneren der Gondel 21 vermieden werden können.

Die Erfindung wurde anhand der Verwendung in einer Windkraftanlage 20 beschrieben. Sie lässt sich jedoch auch für ein Schiff oder einen Zug verwenden, eben dort, wo ein Trockentransformator 18 mit hoher Leistungsdichte in einer Umgebung eingebaut werden muss, welche hermetisch von der Umwelt abgeschirmt ist. Bei Verwendung im Schiff oder im Zug wird der Kondensator 17 entsprechend an die Zugumkleidung oder die Schiffsaussenwand geführt oder wird ausserhalb der Zugumkleidung oder der Schiffsaussenwand montiert. Eine Kühlung des Kondensators 17 ist dann durch den Fahrtwind bzw. bei Verwendung auf dem Schiff sogar durch das umströmende Fahrwasser möglich.

### Bezugszeichenliste

- 1: Transformatorspule
- 2: Kern
- 3: Primärwicklung
- 301: erste, innere Windung der Primärwicklung
- 302: zweite, äussere Windung der Primärwicklung
- 4: Sekundärwicklung
- 401: erste, innere Windung der Sekundärwicklung
- 402, 403: Windungen der Sekundärwicklung
- 404: äussere Windung der Sekundärwicklung
- 5: Wickelachse der Transformatorspule
- 6,7,8: elektrische Isolierlagen
- 10: Wärmerohr
- 11: Arbeitsmedium
- 12: Verdampfer
- 13: Verdampferauslass
- 14: Epoxydharzverguss
- 15: Verdampferzwischenraum
- 16: Verdampfersegment
- 17: Kondensator
- 18: Transformator
- 19: Generator
- 20: Windkraftanlage
- 21: Gondel
- 22: Gondeldach

## Patentansprüche

1. Trockentransformatorspule (1) mit einer primären Wicklung (3) und einer sekundären Wicklung (4), welche Wicklungen (3, 4) Windungen (301, 302, 401, ..., 404) aufweisen und mit einem passiv arbeitendem Wärmerohr (10) zum Abführen von Wärmeenergie der Transformatorspule (1), wobei die Transformatorspule (1) eine Wickelachse (5) aufweist entlang der die Wicklungen (3, 4) angeordnet sind und wobei ein zum Verdampfen eines Arbeitsmediums (11) als Verdampfer (12) bezeichneter Abschnitt des Wärmerohres (10) im Bereich der Wicklungen (3, 4) angeordnet ist,
wobei
der Verdampfer (12) mehrere ftächenhafte und das Arbeitsmedium (11) aufnehmende Verdampfersegmente (1 6) bildet, welche sich in Umfangrichtung der Wicklungen (3, 4) und entlang der Wickelachse (5) erstrecken und dabei eine Vielzahl der Windungen (401, 402) der Sekundärwicklung (4) überstreichen, die Verdampfersegmente (16) im Bodenbereich geschlossen sind und als ein ringzylinderförmiges Gefäss ausgebildet sind, wobei die Verdampfersegmente (16) von der Sekundärwicklung (4) oder die Sekundärwicklung (4) von den Verdampfersegmenten (16) umschlossen sind und wobei die mehreren flächenhaften Verdampfersegmente (16) in einem Bereich ihrer ersten Enden miteinander verbunden sind um ein Sammelbecken für das Arbeitmedium zu bilden und um eine Zirkulation des Arbeitmediums (11) durch alle Verdampfersegmente (16) zu ermöglichen.

2. Transformatorspule (1) nach Anspruch 1, **dadurch gekennzeichnet, dass** die flächenhaften Verdampfersegmente (16) alle Windungen (301, 302, 401, 402) der Sekundärwicklung (4) und/oder der Primärwicklung (3) überstreichen.

3. Transformatorspule (1) nach Anspruch 1, **dadurch gekennzeichnet, dass** die flächenhaften Verdampfersegmente (16) in einem Bereich ihrer zweiten Enden miteinander verbunden sind um wenigstens einen Verdampferauslass (13) für das Arbeitsmedium (11) zu bilden.

4. Transformatorspule (1) nach einem der vorherigen Ansprüche, **dadurch gekennzeichnet, dass** das wenigstens eines der flächenhaften den Verdampfer (12) bildende Verdampfersegmente (16) ringförmig und/oder konzentrisch zur Wickelachse (5) ausgebildet ist.

5. Transformatorspule (1) nach einem der vorherigen Ansprüche, **dadurch gekennzeichnet, dass** der Verdampfer innerhalb der Windung (301) mit kleinstem Windungsdurchmesser oder zwischen zwei Windungen (301, 302) der Primärwicklung (3) angeordnet ist.

6. Transformatorspule (1) nach einem der vorherigen Ansprüche, **dadurch gekennzeichnet, dass** der Verdampfer zwischen Primärwicklung (3) und Sekundärwicklung (4) angeordnet ist.

7. Transformatorspule (1) nach einem der vorherigen Ansprüche, **dadurch gekennzeichnet, dass** der Verdampfer die Windung (402) der Sekundärwicklung (4) mit dem grösstem Windungsdurchmesser umschliesst.

8. Transformatorspule (1) nach einem der vorherigen Ansprüche, **dadurch gekennzeichnet, dass** der Verdampfer (12) mit der Sekundärwicklung (4) mittels eines Giessharzes zu einem Block vergossen ist.

9. Transformatorspule (1) nach einem der Ansprüche 5 oder 7, **dadurch gekennzeichnet, dass** der Verdampfer (12) aus elektrisch isolierendem Material ist und ein Potentialgefälle in den Sekundärwicklungen (4) überstreicht.

10. Transformatorspule (1) nach einem der vorherigen Ansprüche,
**dadurch gekennzeichnet, dass** der Verdampfer (12) ringzylinderförmig ausgebildet ist.

11. Transformatorspule (1) nach einem der vorherigen Ansprüche,
**dadurch gekennzeichnet, dass** der zylinderförmige Verdampfer (12) entlang der Wickelachse (5) eine Anzahl von 2 bis N länglich erstreckte Verdampferzwischenräume (15) aufweist, wodurch 2 bis N flächenhafte Verdampfersegmente (16) gebildet werden.

12. Trockentransformator enthaltend eine Transformatorspule (1) gemäss einem der Ansprüche 1 bis 11.

13. Verfahren zur Herstellung einer kühlbaren harzgekapselten Trockentransformatorspule (1) welche ausgebildet ist nach einem der Ansprüche 1 bis 11, mit den folgenden Schritten:
- Bilden einer Mehrzahl von Windungen (301, 302) der Primärwicklung (3) bestehend aus alternativen Lagen durch Wickeln von elektrisch leitendem Schichtmaterial und elektrischem Isoliermaterial um eine Wickelachse (5),
- Wickeln einer Mehrzahl der Windungen (401, 402) der Sekundärwicklung (4),
- Umhüllen der Windungen (401, 402) mittels eines Hohlkörpers aus verformbaren Material,
- Vergiessen der Windungen (401, 402) der Sekundärwicklung (4) und des Hohlkörpers mittels eines Giessharzes und dadurch Formstabilisieren des angeordneten Hohlkörpers der als Verdampfer (12) dient,
- Aushärten des Harzes, unter Bildung eines Blockes aus der Sekundärwicklung (4) und des Hohlkörper,
- Anordnen des Blockes aus der Sekundärwicklung (4) und des Hohlkörpers um die gewickelte Primärwicklung (3).

14. Verfahren zur Herstellung nach Anspruch 13, **dadurch gekennzeichnet, dass** der Hohlkörper mittels eines Lösungsmittels oder mittels Wärme aufgelöst wird und dadurch der Verdampfer (12) als ein Hohlvolumen im Giessharz gebildet wird.

15. Windkraftanlage mit einer eine Kapselung aufweisenden Gondel (21), wobei im Inneren der Gondel (21) der Transformator (18) nach Anspruch 12 angeordnet ist.

16. Windkraftanlage nach Anspruch 15, wobei das Wärmerohr (10) des Transformators (18) einen Kondensator (17) zum Kondensieren des Arbeitsmediums (11) umfasst, **dadurch gekennzeichnet, dass** der Kondensator (17) in engem thermischen Kontakt mit der Kapselung der Gondel (21) ist, so dass die Kapselung einen Teil des Kondensators (1 7) bildet oder die Funktion von Kühlrippen hat und so die Wärmeenergie des Transformators (18) über die Kapselung (17) an die Umwelt abgeführt wird.

17. Windkraftanlage nach Anspruch 15, wobei das Wärmerohr (10) des Transformators (18) einen Kondensator (1 7) aufweist und sich der Kondensator (1 7) ausserhalb der Kapselung der Gondel (21) erstreckt, insbesondere als eine Kühlrippenanordung ausgebildet ist, die sich ausserhalb der Kapselung erstreckt.

18. Windkraftanlage nach Anspruch 15, wobei das Wärmerohr (10) des Transformators (18) einen Kondensator (17) umfasst, **dadurch gekennzeichnet, dass** der Kondensator (17) mittels eines in der Gondel (21) verlaufenen Luftstromes gekühlt wird.

19. Schiff mit einem Trockentransformator nach Anspruch 12, wobei das Wärmerohr (10) des Transformators (18) einen Kondensator (1 7) aufweist und der Kondensator (17) direkt mit einer Schiffswand oder einem Schiffsboden thermisch koppelt.

20. Zug mit einem Transformator nach Anspruch 12, wobei das Wärmerohr (10) einen Kondensator (1 7) aufweist und der Kondensator (17) sich ausserhalb einer Verkleidung des Zuges erstreckt und durch den Fahrtwind kühlbar ist.

## Claims

1. Dry transformer coil (1) having a primary winding (3) and a secondary winding (4), which windings (3, 4) have turns (301, 302, 401, ..., 404) and having a passively operating heat pipe (10) for carrying thermal energy away from the transformer coil (1), with the transformer coil (1) having a winding axis (5) along which the windings (3, 4) are arranged, and with a section of the heat pipe (10), which is referred to as an evaporator (12) for evaporation of a working medium (11), being arranged in the area of the windings (3, 4), with the evaporator (12) forming a plurality of extensive evaporator segments (16) which hold the working medium (11), extend in the circumferential direction of the windings (3, 4) and along the winding axis (5) and cover a multiplicity of the turns (401, 402) of the secondary winding (4), with the evaporator segments (16) being closed in the bottom area and being in the form of an annular cylindrical vessel, with the evaporator segments (16) being surrounded by the secondary winding (4), or with the secondary winding (4) being surrounded by the evaporator segments (16), and with the plurality of extensive evaporator segments (16) being connected to one another in an area of their first ends, in order to form a collecting trough for the working medium and in order to allow circulation of the working medium (11) through all the evaporator segments (16).

2. Transformer coil (1) according to Claim 1, **characterized in that** the extensive evaporator segments (16) cover all the turns (301, 302, 401, 402) of the secondary winding (4) and/or of the primary winding (3).

3. Transformer coil (1) according to Claim 1, **characterized in that** the extensive evaporator segments (16) are connected to one another in an area of their second ends in order to form at least one evaporator outlet (13) for the working medium (11).

4. Transformer coil (1) according to one of the preceding claims, **characterized in that** the at least one of the extensive evaporator segments (16) which form the evaporator (12) is annular and/or concentric with respect to the winding axis (5).

5. Transformer coil (1) according to one of the preceding claims, **characterized in that** the evaporator is arranged within the turn (301) having the smallest turn diameter, or between two turns (301, 302) of the primary winding (3).

6. Transformer coil (1) according to one of the preceding claims, **characterized in that** the evaporator is arranged between the primary winding (3) and the secondary winding (4).

7. Transformer coil (1) according to one of the preceding claims, **characterized in that** the evaporator surrounds the turn (402) of the secondary winding (4) which has the largest turn diameter.

8. Transformer coil (1) according to one of the preceding claims, **characterized in that** the evaporator (12) together with the secondary winding (4) is encapsulated by means of a cast resin to form a block.

9. Transformer coil (1) according to one of Claims 5 or 7, **characterized in that** the evaporator (12) is formed from electrically insulating material and covers a potential gradient in the secondary windings (4).

10. Transformer coil (1) according to one of the preceding claims, **characterized in that** the evaporator (12) is in the form of an annular cylinder.

11. Transformer coil (1) according to one of the preceding claims, **characterized in that** the cylindrical evaporator (12) has a total of 2 to N elongated evaporator intermediate spaces (15) along the winding axis (5), thus forming 2 to N extensive evaporator segments (16).

12. Dry transformer containing a transformer coil (1) according to one of Claims 1 to 11.

13. Method for production of a coolable, resin-encapsulated dry transformer coil (1), which is designed according to one of Claims 1 to 11, having the following steps:
- formation of a plurality of turns (301, 302) of the primary winding (3) consisting of alternate layers by winding electrically conductive layer material and electrical insulating material around a winding axis (5),
- winding a plurality of the turns (401, 402) of the secondary winding (4),
- sheathing of the turns (401, 402) by means of a hollow body composed of deformable material,
- encapsulation of the turns (401, 402) of the secondary winding (4) and of the hollow body by means of a casting resin and thus stabilization of the shape of the hollow body which is arranged and is used as an evaporator (12),
- curing of the resin, forming a block comprising the secondary winding (4) and the hollow body,
- arrangement of the block comprising the secondary winding (4) and the hollow body around the wound primary winding (3).

14. The method for production according to Claim 13, **characterized in that** the hollow body is dissolved by means of a solvent or by means of heat, and the evaporator (12) is thus formed as a hollow volume in the casting resin.

15. Wind power installation having a nacelle (21) which has encapsulation, with the transformer (18) according to Claim 12 being arranged in the interior of the nacelle.

16. Wind power installation according to Claim 15, with the heat pipe (10) of the transformer (18) comprising a condenser (17) for condensation of the working medium (11), **characterized in that** the condenser (17) is in close thermal contact with the encapsulation of the nacelle (21), such that the encapsulation forms a part of the condenser (17) or has the function of cooling ribs, and the thermal energy from the transformer (18) is thus carried away to the environment via the encapsulation (17).

17. Wind power installation according to Claim 15, with the heat pipe (10) of the transformer (18) having a condenser (17) and with the condenser (17) extending outside the encapsulation of the nacelle (21), in particular in the form of a cooling rib arrangement which extends outside the encapsulation.

18. Wind power installation according to Claim 15, with the heat pipe (10) of the transformer (18) comprising a condenser (17), **characterized in that** the condenser (17) is cooled by means of an air flow which runs in the nacelle (21).

19. Marine vessel having a dry transformer according to Claim 12, with the heat pipe (10) of the transformer (18) having a condenser (17) and the condenser (17) being thermally coupled directly to a marine-vessel wall or a marine-vessel bottom.

20. Train having a transformer according to Claim 12, with the heat pipe (10) having a condenser (17) and with the condenser (17) extending outside cladding on the train, and being coolable by the wind of motion.

## Revendications

1. Bobine de transformateur de type sec (1) comportant un enroulement primaire (3) et un enroulement secondaire (4), lesquels enroulements (3, 4) comprennent des spires (301, 302, 401, ..., 404) et comprenant un caloduc à fonctionnement passif (10) destiné à évacuer l'énergie thermique de la bobine de transformateur (1), dans lequel la bobine de transformateur (1) présente un axe d'enroulement (5) le long duquel sont agencés les enroulements (3, 4) et dans lequel une partie du caloduc (10) est disposée dans la région des enroulements (3, 4) en tant qu'évaporateur (12) destiné à évaporer un fluide de travail (11), dans lequel
l'évaporateur (12) forme plusieurs segments d'évaporateur (16) laminaires et recevant le fluide de travail (11) qui s'étendent dans la direction circonférentielle des enroulements (3, 4) et le long de l'axe d'enroulement (5) et passent ainsi sur une pluralité des spires (401, 402) de l'enroulement secondaire (4), les segments d'évaporateur (16) sont fermés dans la région inférieure et sont réalisés sous la forme d'une enceinte ayant la forme d'un cylindre annulaire, dans lequel les segments d'évaporateur (16) de l'enroulement secondaire (4) ou l'enroulement secondaire (4) sont entourés par les segments d'évaporateur (16) et dans lequel les multiples segments d'évaporateur laminaires (16), dans une région de leurs premières extrémités, sont reliés les uns aux autres afin de former un réservoir destiné au fluide de travail et afin de permettre une circulation du fluide de travail (11) à travers tous les segments d'évaporateur (16).

2. Bobine de transformateur (1) selon la revendication 1, **caractérisée en ce que** les segments d'évaporateur laminaires (16) passent sur la totalité des spires (301, 302, 401, 402) de l'enroulement secondaire (4) et/ou de l'enroulement primaire (3).

3. Bobine de transformateur (1) selon la revendication 1, **caractérisée en ce que** les segments d'évaporateur laminaires (16) sont reliés les uns aux autres dans une région de leurs secondes extrémités afin de former au moins une sortie d'évaporateur (13) destinée au fluide de travail (11).

4. Bobine de transformateur (1) selon l'une quelconque des revendications précédentes, **caractérisée en ce que** l'au moins un des segments d'évaporateur laminaires (16) formant l'évaporateur (12) est réalisé de manière à présenter une forme annulaire et/ou concentrique par rapport à l'axe d'enroulement (5).

5. Bobine de transformateur (1) selon l'une quelconque des revendications précédentes, **caractérisée en ce que** l'évaporateur est disposé à l'intérieur de la spire (301) présentant le diamètre de spire le plus petit ou entre deux spires (301, 302) de l'enroulement primaire (3).

6. Bobine de transformateur (1) selon l'une quelconque des revendications précédentes, **caractérisée en ce que** l'évaporateur est disposé entre l'enroulement primaire (3) et l'enroulement secondaire (4).

7. Bobine de transformateur (1) selon l'une quelconque des revendications précédentes, **caractérisée en ce que** l'évaporateur entoure la spire (402) de l'enroulement secondaire (4) ayant le diamètre de spire le plus grand.

8. Bobine de transformateur (1) selon l'une quelconque des revendications précédentes, **caractérisée en ce que** l'évaporateur (12) est encapsulé en un bloc avec l'enroulement secondaire (4) au moyen d'une résine d'encapsulation.

9. Bobine de transformateur (1) selon l'une quelconque des revendications 5 ou 7, **caractérisée en ce que** l'évaporateur (12) est constitué d'un matériau électriquement isolant et couvre une chute de potentiel dans les enroulements secondaires (4).

10. Bobine de transformateur (1) selon l'une quelconque des revendications précédentes, **caractérisée en ce que** l'évaporateur (12) et réalisé sous la forme d'un cylindre annulaire.

11. Bobine de transformateur (1) selon l'une quelconque des revendications précédentes, **caractérisée en ce que** l'évaporateur de forme cylindrique (12) comporte le long de l'axe d'enroulement (5) une pluralité de 2 à N interstices d'évaporateur (15) s'étendant longitudinalement, pour ainsi former 2 à N segments d'évaporateur laminaires (16).

12. Transformateur comportant une bobine de transformateur (1) selon l'une quelconque des revendications 1 à 11.

13. Procédé de fabrication d'une bobine de transformateur de type sec (1) encapsulée dans de la résine et pouvant être refroidie, réalisé conformément à l'une quelconque des revendications 1 à 11, comprenant les étapes suivantes :
- former une pluralité de spires (301, 302) de l'enroulement primaire (3) constituées de couches alternées par enroulement d'un matériau laminaire électriquement conducteur et d'un matériau électriquement isolant autour d'un axe d'enroulement (5),
- enrouler une pluralité des spires (401, 402) de l'enroulement secondaire (4),
- envelopper les spires (401, 402) d'un corps creux constitué d'un matériau déformable,
- encapsuler les spires (401, 402) de l'enroulement secondaire (4) et le corps creux au moyen d'une résine d'encapsulation et stabiliser ainsi la forme du corps creux mis en place qui joue le rôle d'évaporateur (12),
- durcir la résine pour former un bloc constitué de l'enroulement secondaire (4) et du corps creux,
- placer le bloc constitué de l'enroulement secondaire (4) et du corps creux autour de l'enroulement primaire enroulé (3).

14. Procédé de fabrication selon la revendication 13, **caractérisé en ce que** le corps creux est dissous au moyen d'un solvant ou par application de chaleur et **en ce que** l'évaporateur (12) est ainsi réalisé sous la forme d'un volume creux dans la résine d'encapsulation.

15. Système d'énergie éolienne comprenant une nacelle (21) comportant une enceinte, dans lequel le transformateur (18) selon la revendication 12 est disposé dans la nacelle (21).

16. Système d'énergie éolienne selon la revendication 15, dans lequel le caloduc (10) du transformateur (18) comprend un condenseur (17) destiné à condenser le milieu fonctionnel (11), **caractérisé en ce que** le condenseur (17) est en contact thermique étroit avec l'enceinte de la nacelle (21) afin que l'enceinte forme une partie du condenseur (17) ou possède une fonction d'ailette de refroidissement et permette ainsi d'évacuer l'énergie thermique du transformateur (18) à travers l'enceinte (17) vers l'environnement.

17. Système d'énergie éolienne selon la revendication 15, dans lequel le caloduc (10) du transformateur (18) comprend un condenseur (17) et dans laquelle le condenseur (17) s'étend à l'extérieur de l'enceinte de la nacelle (21), et est plus particulièrement réalisé sous la forme d'un dispositif à ailettes qui s'étend à l'extérieur de l'enceinte.

18. Système d'énergie éolienne selon la revendication 15, dans lequel le caloduc (10) du transformateur (18) comprend un condenseur (17), **caractérisé en ce que** le condenseur (17) est refroidi au moyen d'un flux d'air circulant dans la nacelle (21).

19. Navire comportant un transformateur de type sec selon la revendication 12, dans lequel le caloduc (10) du transformateur (18) comprend un condenseur (17) et le condenseur (17) est directement couplé thermiquement à une paroi du navire ou à un fond du navire.

20. Train comportant un transformateur de type sec selon la revendication 12, dans lequel le caloduc (10) comprend un condenseur (17) et le condenseur (17) s'étend à l'extérieur d'un revêtement du train et peut être refroidi par le vent dû au déplacement.
